# EUROPEAN PATENT APPLICATION

(11) **EP 2 584 149 A2**
(43) Date of publication of application: **24.04.2013**
(21) Application number: 12188808.5
(22) Date of filing: 17.10.2012
(51) Int. Cl.: F01D 5/28, B23P 15/04

(54) **Turbine blade with erosion shield plate**

(30) Priority: 20.10.2011 JP 2011230259
(71) Applicant: Hitachi Ltd., Tokyo 100-8280 (JP)
(72) Inventor: Arai, Masahiko, Tokyo, 100-8220 (JP); Doi, Hiroyuki, Tokyo, 100-8220 (JP); Yoda, Hideo, Tokyo, 100-8220 (JP); Tanaka, Katsumi, Tokyo, 100-8220 (JP)
(74) Representative: Beetz & Partner

(57) **Abstract**

Disclosed is a turbine blade including a turbine blade substrate (63) including an iron-base alloy; an erosion shield plate (61) including a Co-base alloy; and a shim (62) including a Ni-Fe alloy, in which the erosion shield plate (61) is fixed to a leading edge of the turbine blade substrate (63) with the shim (62) therebetween by an electron beam welding. Thus, a turbine blade having a highly reliable, bonded portion of an erosion shield, and a turbine rotor and a steam turbine using the turbine blade are provided.

## Description

### TECHNICAL FIELD:

The present invention relates to a novel turbine blade, and a turbine rotor and a steam turbine using the turbine blade.

### BACKGROUND ART:

An erosion shield is attached to a leading edge of a turbine rotor blade used in wet steam, such as a rotor blade of a turbine for nuclear or thermal power generation. For attachment of the erosion shield, for example, Japanese Unexamined Patent Application Publication No. 2001-98349 (Document 1) discloses a method of attaching a Stellite (trademark) plate which is a Co-based alloy to a high-strength martensite steel blade by an electron beam welding or a tungsten-inert-gas (TIG) welding. Japanese Unexamined Patent Application Publication No. Hei 05-23920 (Document 2) discloses a welding method of an erosion shield of a blade, the method including steps of forming joint surfaces of the erosion shield asymmetrically, inserting shims formed of Inconel (trademark) which is a Ni-based alloy from a back side and a front side of the blade, and bonding the blade to the erosion shield by a single pass electron beam welding to the respective shims in order to improve ductility and toughness of the welding between the blade and the erosion shield.

### SUMMARY OF THE INVENTION:

A turbine blade according to an embodiment of the present invention includes a turbine blade substrate including an iron-base alloy, an erosion shield plate including a Co-base alloy, and a shim including a Ni-Fe alloy, in which the erosion shield plate is fixed to a leading edge of the turbine blade substrate with the shim therebetween by an electron beam welding.

According to the embodiment of the present invention, a steam turbine blade that has a highly reliable weld of an erosion shield plate can be manufactured, so that a structure that withstands a heavier load can be achieved, resulting in significant effects on an increase in output and efficiency of a steam turbine power plant.

### BRIEF DESCRIPTION OF THE DRAWINGS:

Fig. 1 is a front view illustrating a long blade of a steam turbine;
Fig. 2 is a sectional view illustrating a weld groove;
Fig. 3 is a sectional view illustrating a low-pressure steam turbine; and
Fig. 4 is a sectional view illustrating another low-pressure steam turbine.

### DETAILED DESCRIPTION OF THE PREFERRED EMBODIMENTS:

The related arts disclosed in Documents 1 and 2 have room for improvement as follows.

In the TIG welding, heat input is large, and the blade is readily deformed, leading to a need of correction of bending of the blade. In addition, much effort is required for setup in a vacuum chamber in the electron beam welding from the back and front sides with the asymmetrically processed Stellite (trademark) plate. In electron beam welding, beam amplitude is used to achieve certain melting width, resulting in an increase in penetration width on a beam injection side. In such a case, dilution rate increases in each of the blade base metal and the Stellite (trademark) member, and thus ductility and toughness of the diluted portion are reduced, leading to a reduction in reliability against failure. Such previously proposed methods of attaching the erosion shield disadvantageously increases the number of manufacturing steps and thus increases frequency of defects, resulting in a reduction in reliability of the blade. Hence, there has been a demand for a development of reducing the number of manufacturing steps and improving reliability of the blade.

It is desirable to provide a turbine blade having a highly reliable, attached portion of an erosion shield, a turbine rotor and a steam turbine using the turbine blade.

The present invention is now described in detail.

A turbine blade of an embodiment of the present invention including: a turbine blade substrate including an iron-base alloy; an erosion shield plate including a Co-base alloy; and a shim including a Ni-Fe alloy, in which the erosion shield plate is fixed to a leading edge of the turbine blade substrate with the shim disposed therebetween, and in which thicknesses of a weld zone of the turbine blade substrate, the erosion shield plate and the shim at a section perpendicular to a radial direction of the turbine blade substrate are larger than a thickness of a main body of the turbine blade substrate at the section, and the thickness of the shim is equal to the thicknesses of the weld zone.

Thus, the erosion shield can be fixed by only a single-pass electron beam welding to the only shim. Therefore, the number of manufacturing steps can be reduced, and reliability of the blade can be improved.

In the turbine blade of an embodiment of the present invention, an erosion shield is preferably fixed by a single-pass electron beam welding. In this fixing, preferably, a convex portion having a thickness larger than that of each of the turbine blade and the erosion shield is provided in a weld groove, and a shim having substantially the same thickness as that of the convex portion is used.

In other words, thicknesses of a weld zone of the turbine blade substrate, the erosion shield plate and the shim at a section perpendicular to a radial direction of the turbine blade substrate are larger than a thickness of a turbine blade substrate body at the section, and the thicknesses of the turbine blade substrate, the erosion shield plate and the shim are equal. Here, "the turbine blade substrate body" means an intermediate portion of the turbine blade (substrate) at the section.

A groove is preferably shaped such that the width of a shim is wider on an electron-beam injection side in fixing of the erosion shield by the electron beam welding. In addition, Ni-Fe alloy containing Ni of 70% or more by weight is used as the material of the shim, thereby an adverse phase of a diluted portion can be reduced in each of the iron-base blade material and Co-base alloy shield material.

12%Cr stainless steel or precipitation hardened stainless steel which is one of iron base materials typically used for the turbine blade is preferably used as the material of the turbine blade in a final stage of a low-pressure steam turbine. In particular, the 12%Cr martensite steel preferably contains C of 0.14 to 0.40%, preferably 0.19 to 0.40%; Si of 0.5% or less; Mn of 1.5% or less; Ni of 2 to 3.5%; Cr of 8 to 13%; Mo of 1.5 to 4%; Nb and/or Ta of 0.02 to 0.3% in total; V of 0.05 to 0.35%; and N of 0.04 to 0.15% by weight. More preferably, the 12%Cr martensite steel contains a combination of C of 0.20 to 0.40%; and Mo of 1.5 to 3.5%, or C of 0.14 to 0.19%; and Mo of 2.0 to 3.5% by weight. The erosion shield plate is composed of Co-base alloy Stellite (trademark) having high abrasion resistance, which contains Cr of 25 to 30%; W of 1.5 to 7.0%; and C of 0.5 to 1.5% by weight. Highly ductile Ni-Fe alloy is preferred as the material of the shim. That is, the material is necessary to have a function of preventing propagation of a crack to a base metal which may occur in the Stellite (trademark). The material of the shim is diluted with each of the base metal and the Stellite (trademark). A high dilution rate of each of the base metal and the Stellite (trademark) leads to formation of eutectic carbide at a solidification interface, resulting in reductions in ductility and toughness. Thus, the material of the shim preferably contains Ni of 70% or more by weight.

The material of the shim preferably contains C of 0.15% or less, Si of 0.50% or less, Mn of 1.0% or less, Cr of 14 to 17%, Nb of 3% or less, Fe of 6 to 10%, Al of 0.5% or less, Ti of 0.5% or less, and Ni of 70% or more by weight.

The base metal and the Stellite (trademark) each have a high dilution rate on a beam injection side. Hence, the shim width is preferably widened on the beam injection side so that the dilution rate is substantially even in a thickness direction.

The low-pressure steam turbine according to the embodiment of the present invention is preferably configured such that a rotational frequency is 3000 or 3600 rpm, the rotor blades are symmetrically provided in five or more stages, preferably six or more stages, and more preferably eight to ten stages, the first-stage rotor blade is implanted in the middle of the rotor shaft so that a double-flow structure is formed, and the rotor shaft has a distance (L) between bearing centers of 6500 mm or more (preferably, 6600 to 7500 mm). The blade in the first stage preferably has a length of 90 mm or more, and the blade in the final stage has a length as described later. The rotor shaft is preferably composed of bainite steel having 0.02% yield strength of 80 kg/mm² or more, 0.2% yield strength of 87.5 kg/mm² or more or tensile strength of 92 kg/mm² or more at room temperature at the central portion of the rotor shaft, and having fracture appearance transition temperature (FATT) of -5°C or lower or a 20°C V-notch impact value of 10 kg·m/cm² or more.

The final-stage blade of the low-pressure steam turbine is necessary to have not only high tensile strength but also high high-cycle fatigue strength in order to withstand high centrifugal force and vibration stress due to high-speed rotation. In the 12%Cr martensite steel, δ-ferrite extremely reduces fatigue strength of the steel. Thus, the 12%Cr martensite steel is preferably formed into fully tempered martensite structure so that the **δ**-ferrite phase is effectively not contained. In addition, the 12%Cr martensite steel is preferably subjected to thermal refining in such a manner that the 12%Cr steel is forged after melting, and then held at 1000 to 1100°C (preferably, 1000 to 1055°C) for preferably 0.5 to 3 hr, and then rapidly cooled to room temperature for quenching (preferably oil quenching), and then the 12%Cr steel is subjected to tempering at 540 to 620°C, preferably two or more steps of tempering including primary tempering where the steel is held at 540 to 570°C for preferably 1 to 6 hr, and then cooled to room temperature, and secondary tempering where the steel is held at 560 to 590°C for preferably 1 to 6 hr, and then cooled to room temperature. The temperature of the secondary tempering is preferably higher than that of the primary tempering. In particular, the secondary tempering temperature is preferably 10 to 30°C higher than the primary tempering temperature, and more preferably 15 to 20°C higher than that. In addition, the 12%Cr martensite steel is preferably cooled to the temperature of dry ice or liquid nitrogen as deep cooling in order to completely decompose the residual austenite.

The blade used in the final stage of the low pressure turbine has a length of 882 mm (35.8"), 952, 5 mm (37.5"), 1016 mm (40"), and 1067 mm (42") for 3600 rpm, and 1092 mm (43"), 1168.4 mm (46"), 1219.2 mm (48"), and 1270 mm (50") for 3000 rpm.

The final-stage blade of the low-pressure steam turbine is configured such that the lateral inclination of a blade section is parallel to the axial direction of a rotation axis in the vicinity of an implant section, and the leading end of the blade section is preferably inclined by 65 to 85 degrees with respect to the axial direction, and more preferably inclined by 70 to 80 degrees with respect to that. In the final-stage blade, preferably, the blade section has a length of 43 inches or more for 3000 rpm or 37.5 inches or more for 3600 rpm, and the implant section is of a fork type having nine or more implants for the length of 43 inches or more and seven or more implants for the length of 37.5 inches or more, or of an inverted Christmas tree type havingprojections in four or more stages. The implant section preferably has a width 2.1 to 2.5 times as large as the width of the leading end of the blade section. Preferably, the implant section is of the fork type, and has insertion holes for fixing pins to the rotor shaft in a plurality of stages, and the insertion hole has a larger diameter on a blade section side than on a side opposite thereto.

The rotor shaft of the low-pressure steam turbine is preferably composed of low alloy steel having a fully tempered bainite structure containing C of 0.2 to 0.3%; Si of 0.15% or less; Mn of 0.25% or less; Ni of 3.25 to 4.5%; Cr of 1.6 to 2.5%; Mo of 0.25 to 0.6%; V of 0.05 to 0.25%; and Fe of 92.5% or more by weight, and is preferably manufactured by a method similar to a manufacturing method of a high-pressure or intermediate-pressure rotor shaft. In particular, the rotor shaft is preferably manufactured using a super clean material, i.e., a low impurity material in which the content of Si is 0.05% or less, the content of Mn is 0.1% or less, and the content of impurities such as P, S, As, Sb and Sn is minimized to 0.025% or less, preferably 0.015% or less in total by weight. Preferably, the content of each of P and S is 0.010% or less, the content of each of Sn and As is 0.005% or less, and the content of Sb is 0.001% or less by weight. The rotor shaft is preferably composed of bainite steel having 0.02% yield strength of 80 kg/mm² or more, 0.2% yield strength of 87.5 kg/mm² or more or tensile strength of 92 kg/mm² or more at room temperature at the central portion of the rotor shaft, and having FATT of -5°C or lower or a 20°C V-notch impact value of 10 kg·m/cm² or more.

For the rotor shaft according to an embodiment of the present invention, preferably, the final-stage rotor blade of the fork type is provided on a rotor shaft with a central hole, and the final-stage rotor blade of the inverted Christmas tree type is provided on a rotor shaft without a central hole.

The blades other than the final-stage blade and a nozzle for the low pressure turbine are preferably composed of fully tempered martensite steel containing C of 0.05 to 0.2%, Si of 0.1 to 0.5%, Mn of 0.2 to 1.0%, Cr of 10 to 13%, and Mo of 0.04 to 0.2%.

Carbon cast steel containing C of 0.2 to 0.3%, Si of 0.3 to 0.7%, and Mn of 1.0% or less is preferred for both inner and outer casings for the low pressure turbine.

Examples of the present invention are now described.

### [Example 1]

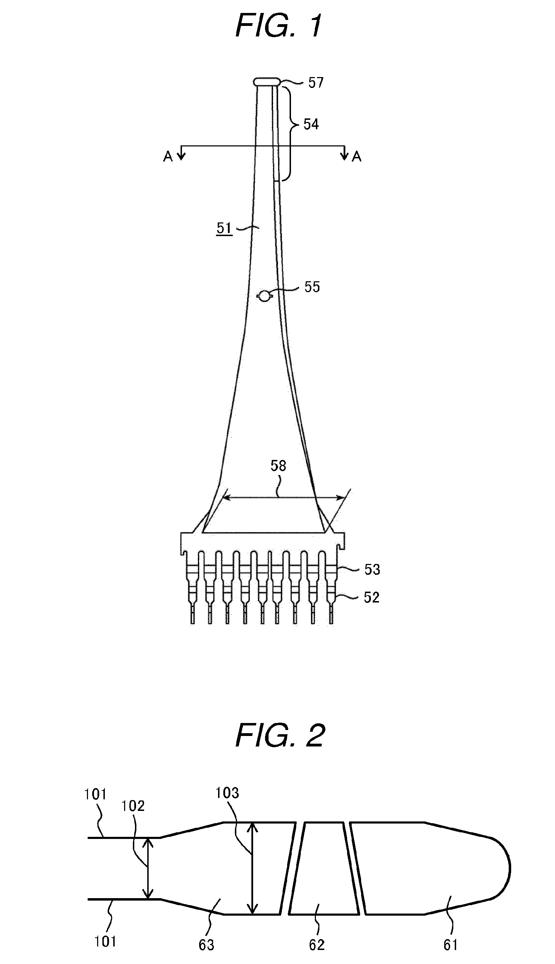

Fig. 1 illustrates a turbine blade of 43 inches long to which an erosion shield plate is attached by electron beam welding.

An ingot for the 43-inch long blade (blade substrate) was prepared by an electroslag remelting process, and the ingot was then forged and heat-treated. The ingot was forged within a temperature range of 850 to 1150°C. In the heat treatment, the ingot was held at 1050°C for 1 hr and then oil-quenched, and then was subjected to two steps of tempering including primary tempering where the ingot was held at 550°C for 2 hr and then cooled to room temperature, and secondary tempering where the ingot was held at 560°C for 2 hr and then cooled to room temperature. The metal structure of the long blade was a fully tempered martensite structure. A blade section 51 has a largest thickness at an implant section side, and is gradually reduced in thickness as approaching its leading end. The blade implant section 52 is of a fork type having nine implants. In a frank of the implant section in Fig. 1, pin insertion holes 53 are provided in three stages, pins are to be inserted into the pin insertion holes 53 in a fork fashion, and concave portions are provided in correspondence thereto. The diameter of the pin insertion hole 53 is largest on a blade section side, and is gradually reduced with distance from the blade section side. A lateral inclination of the blade section 51 is substantially parallel to the axial direction of the axle at the blade implant section 52, and gradually increases to about 75 degrees at the leading end of the blade. In Example 1, the largest width of the blade implant section 52 is about 2.4 times as large as the width of the leading end of the blade section, and is preferably 2.2 to 2.6 times as large as the width thereof. A numeral 58 indicates width of an extension of a tangent of the blade section 51 to the vicinity of the blade implant section 52, which corresponds to an effective width of the blade section 51, and is about 1.79 times as large as the width of the leading end of the blade section, and preferably 1.60 to 1.85 times as large as the width thereof.

The blade section 51 has an erosion shield 54 on one side near its leading end, has a continuous cover 57 on its leading end. In addition, the blade section 51 has a tie-boss 55 near its center.

Fig. 2 illustrates a groove configuration, or a partial cross-sectional view taken along line A-A of Fig. 1.

In this figure, the turbine blade is made of a turbine blade substrate 63, an erosion shield plate 61 (Stellite (trademark) shield plate) and a shim 62 disposed therebetween.

The turbine blade substrate 63 has blade faces 101 (finished surfaces) on both side of a main body of the turbine blade substrate 63, and has a convex portion thicker than the main body at a part connected to the shim 62. The shim 62 and a part connected to the shim 62 of the erosion shield plate 61 have convex portions thicker than the main body of the turbine blade substrate 63. These convex portions (being a weld zone) have substantially the same thicknesses, which are shown as a convex portions thickness 103 thicker than a main body thickness 102. The shim 62 shown in this figure is one piece which has a trapezoidal shape in section. The trapezoidal shape is also a shape of a groove. The shape of the groove is preferable to be wider on an electron-beam injection side.

On the other hand, two shims disclosed in Document 2 respectively need a single-pass electron beam welding. That is, the two shims need the single-pass electron beam welding twice as a whole (paragraph [0010] in Document 2).

As a result, no undercut occurred. The undercut is a concave and usually occurs at a weld boundary. The above convex portions can allow the undercut and can keep the thickness of the blade as a whole even if the undercut occurs.

In addition, the shim width was widened on an electron-beam injection side, resulting in a substantially uniform dilution rate. The reason is as follows:

Heat input is larger on the electron-beam injection side, its melted zone is wider, and a content of the shim containing in its melted diluted layer relatively decreases. It is preferable to widen the shim width on the electron-beam injection side in order to suppress the dilution to lessen the melted diluted layer in the direction of the thickness.

A face-bend test was conducted using welds on the beam injection side and on a back side. As a result, substantially the same properties were shown between the beam injection side and the back side.

Table 1 shows materials of shims used for the electron beam welding.

A shim A (a working example) containing Ni of 70% or more by weight and a shim B (a comparative example) containing Ni of 60% or more by weight were used to attach an erosion shield plate to a 12Cr steel blade by electron beam welding, and a face-bend test of the welds was conducted.

As a result, the shim A exhibited a large bending angle corresponding to crack occurrence, showing sufficient ductility. In contrast, the shim B exhibited a small bending angle corresponding to crack occurrence, showing insufficient ductility. Microstructure observation revealed that eutectic carbide typified by NbC was reticularly segregated at the dendrite boundary in the shim B, reducing the ductility of the shim B.

**Table 1**

| Part | Material | Chemical composition, mass % | | | | | | | | | | |
|---|---|---|---|---|---|---|---|---|---|---|---|---|
| | | C | Si | Mn | Ni | Cr | Co | Mo | Nb | Fe | Al | Ti |
| Shim | A | 0.02 | 0.15 | 0.21 | 74.17 | 15.61 | - | - | - | 9.69 | - | - |
| | B | 0.02 | 0.18 | 0.08 | 61.66 | 21.43 | 0.12 | 8.91 | 3.47 | 3.93 | 0.1 | 0.19 |

### [Example 2]

### (Low-Pressure Steam Turbine)

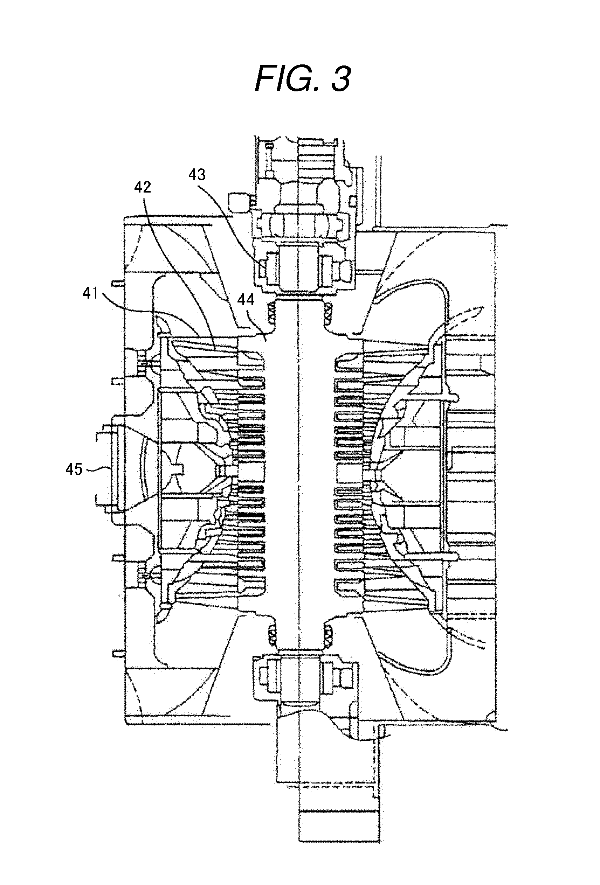

Fig. 3 is a sectional view of a low pressure turbine. Rotor blades 41 are provided in eight stages in a substantially symmetrical manner. In addition, stator blades 42 are provided in correspondence with the rotor blades. A nozzle box 45 is of a double flow type.

Forged super-clean steel having a fully tempered bainite structure is used for a rotor shaft 44 which contains C of 0.2 to 0.3%, Si of 0.03 to 0.1%, Mn of 0.1 to 0.2%, P of 0.01% or less, S of 0.01% or less, Ni of 3.5 to 4.5%, Cr of 1.8 to 2.5%, Mo of 0.3 to 0.5%, V of 0.1 to 0.2%, Al of 0.01% or less, Sn of 0.005% or less, As of 0.005% or less, and Sb of 0.001% or less by weight. The steel was hot-forged, and was then heated at 840°C for 3 hr and then cooled at 100°C/h for quenching, and was then tempered at 575°C for 32 h, resulting in a fully tempered bainite structure of the steel. The steel had high strength and toughness such as 0.02% yield strength of 80 kg/mm² or more, 0.2% yield strength of 87.5 kg/mm² or more, tensile strength of 100 kg/mm² or more, a V-notch impact value of 10 kg-m or more, and FATT of -20°C or lower, showing that the steel allowed implantation of a blade section 43 to 50 inches long as a final-stage rotor blade in Example 2.

In the Example 2, the 43-inch blade was formed using martensite steel containing C of 0.14%, Si of 0.04%, Mn of 0.15%, Cr of 11.5%, Ni of 2.60%, Mo of 2.30%, V of 0.27%, Nb of 0.10%, and N of 0.07%, and was quenched and tempered. The martensite steel had a tensile strength of 134 kg/mm² and a V-notch impact value of 5.0 kg-m/cm². As an erosion shield 54 for preventing erosion due to water drops in steam, a Stellite (trademark) plate including a Co-base alloy containing C of 1.0%, Cr of 28.0%, and W of 4.0% by weight was bonded to the blade by electron beam welding. In the Example 2, a continuous cover 57 (Fig. 1) was formed by machining after integral forging of all components. The continuous cover 57 may be mechanically formed in one unit.

12% Cr steel containing Mo of 0.1% by weight was used for any of the rotor blades other than the final-stage rotor blade and for the stator blades. Cast steel containing C of 0.25% by weight was used for inner and outer casings. In the Example 2, a distance between the centers of bearings 43 was 7500 mm, and a rotor shaft had a diameter of about 1280 mm at a position corresponding to a stator blade section, and has a diameter of about 2275 mm at a rotor-blade implant section.

In the low pressure turbine in the Example 2, the axial width of the rotor-blade implant section gradually increases in four levels, i.e., increases at a fourth stage, a fifth stage, sixth to seventh stages, and an eighth stage from first to third stages, and the width in the final stage is about 2.5 times as large as the width in the first stage.

The lowpressure turbine has a smaller diameter at a portion corresponding to the stator blade section, and the axial width of such a portion gradually increases in three levels, i.e., increases at a fifth step, a sixth step, and a seventh step from a first-stage rotor-blade side, and the width on the final-stage side is about 1.9 times as large as a gap between the first and second stages.

The rotor-blade implant section has a large diameter compared with the portion corresponding to the stator blade, and has a width that increases with an increase in length of the blade section of the rotor blade. A ratio of such a width to the length of the blade section is 0.15 to 0.19 from the first stage to the final stage, which gradually decreases at every stage in that range.

The width of the rotor shaft at the portion corresponding to the stator blade gradually increases at each step from a step between the first and second stages to a step between the final stage and the last stage before the final stage. A ratio of such a width to the length of the blade section is 0.25 to 1.25 and gradually decreases toward a downstream side.

### (Generation Plant)

The generation plant in the Example 2 is mainly configured of a coal-burning boiler, a high pressure turbine, an intermediate pressure turbine, two low pressure turbines, a condenser, a condensate pump, a low-pressure feed water heater system, a deaerator, a boost pump, a feed water pump, and a high-pressure feed water heater system. Superheated and superhigh-pressure steam generated in the boiler enters the high pressure turbine to generate power, and is then reheated in the boiler and enters the intermediate pressure turbine to generate power. The exhaust steam from the intermediate pressure turbine enters the low pressure turbine to generate power, and is then condensed by the condenser. The condensate is fed to the low-pressure feed water heater system and the deaerator by the condensate pump. The feedwater deaerated by the deaerator is fed to the high-pressure feed water heater system by the boost pump and the feed water pump and is heated therein, and is then returned to the boiler.

The feedwater becomes high temperature and pressure steam through an economizer, an evaporator, and a superheater in the boiler. In addition, boiler combustion gas heating the steam exits the economizer, and then enters an air heater to heat air. The feed water pump is driven by a feed-water-pump drive turbine activated by bleed steam from the intermediate pressure turbine.

In the high temperature and pressure steam turbine plant configured in this way, the temperature of the feedwater exiting the high-pressure feed water heater system is extremely higher than temperature of feedwater in a typical thermal power plant; hence, the temperature of the combustion gas exiting the economizer in the boiler is necessarily extremely high compared with that in a typical boiler. Thus, the gas temperature is prevented from lowering through heat recovery from the boiler exhaust gas.

A steel material having a higher strength is used for a rotor shaft for a 1050 MW class generator. In particular, preferred steel has a fully tempered bainite structure containing C of 0.15 to 0.30%, Si of 0.1 to 0.3%, Mn of 0.5% or less, Ni of 3.25 to 4.5%, Cr of 2.05 to 3.0%, Mo of 0.25 to 0.60%, and V of 0.05 to 0.20%, and has room-temperature tensile strength of 93 kgf/mm² or more, particularly 100 kgf/mm² or more, and 50% FATT of 0°C or lower, particularly -20°C or lower. In addition, the preferred steel has a magnetizing force at 21.2 KG of 985 AT/cm or less, and contains the total amount of 0.025% or less of P, S, Sn, Sb and As as impurities, and has a Ni/Cr ratio of 2.0 or less.

Any of the rotor shafts for the high-pressure, intermediate-pressure, and low pressure turbines has a central hole through which presence of a defect is inspected by an ultrasonic examination, a visual inspection, and/or a fluorescence inspection. Such an inspection can be performed by an ultrasonic examination from an outer surface, and therefore the central hole may not be provided.

### [Example 3]

Table 2 shows a main specification of a steam turbine generation plant with steam temperature of 600°C and rated output of 700 MW. The generation plant in Example 3 is of a tandem compound double-flow type, in which a low pressure turbine has a final-stage blade 46 inches long, and integrated high-pressure (HP) and intermediate-pressure (IP) turbines and one (C) or two (D) low-pressure (LP) turbine, each having a rotational frequency of 3000 rpm, are provided. The high-pressure and low-pressure sections are mainly composed of materials shown in Table 2. The steam in the high-pressure section (HP) has a temperature of 600°C and a pressure of 250 kgf/cm². The steam in the intermediate-pressure section (IP) is heated to 600°C by a reheater, and is driven at a pressure of 45 to 65 kgf/cm². The steam enters the low-pressure section (LP) at a steam temperature of 400°C, and is then fed to a condenser at a steam temperature of 100°C or lower and at a vacuum of 722 mmHg.

In the steam turbine generation plant (D) having the integrated high and intermediate pressure turbines and the two tandem low pressure turbines, a bearing-to-bearing distance is about 22.7 m that is 19.4 times longer than the length (1168 mm) of the blade section of the final-stage rotor blade of the low pressure turbine, and thus the total bearing-to-bearing distance per 1 MW is 32.4 mm for the rate output of 700 MW of the generation plant. Furthermore, in the steam turbine generationplant (C) having the integrated high and intermediate pressure turbines and the one low pressure turbine, a bearing-to-bearing distance is about 14. 7 m that is 12.6 times longer than the length (1168 mm) of the blade section of the final-stage rotor blade of the low pressure turbine, which corresponds to a bearing-to-bearing distance of 21.0 mm per rate output of 1 MW.

**Table 2**

| Turbine type | | | TCDF-46 |
|---|---|---|---|
| Rotational frequency | | | 3000/3000RPM |
| Steam condition | | | 25MPa-600°C/600°C |
| Turbine configuration | | C | 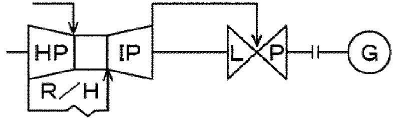 |
| | | D | 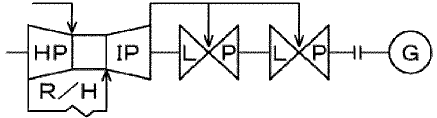 |
| First-stage blade structure | | | 2-tenon saddle-shaped dovetail blade |
| Final-stage blade | | | High-tensile 12Cr forged-steel 46"-long blade |
| Main-steam stop valve body | | | High-tensile 12Cr forged-steel |
| Main-steam control valve body | | | |
| High and intermediate pressure rotor Low pressure rotor | | | High-tensile 12Cr forged-steel 3.5Ni-Cr-Mo-V forged steel |
| Hot-section rotor blade | | | First stage, High-tensile 12Cr forged-steel |
| High and intermediate pressure turbine casing | Inner | | High-tensile 9Cr cast steel |
| | Outer | | High-tensile Cr-Mo-V-B cast steel |
| Thermal efficiency (at rate output, generating end) | | | 47.1% |

| | | | |
|---|---|---|---|
| TCDF: Tandem compound double-flow exhaust, HP: High pressure section, IP: Intermediate pressure section, LP: Low pressure section, R/H: Reheater (boiler) | | | |

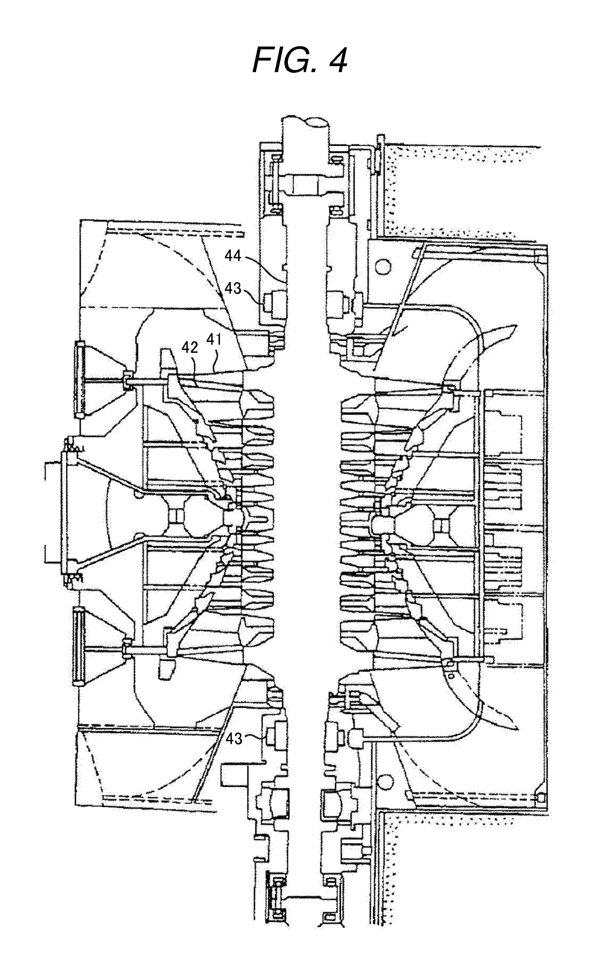

Fig. 4 is a sectional view of a low pressure turbine. One low pressure turbine or two tandem low-pressure turbines are provided. In either case, the low pressure turbine is connected to the high and intermediate pressure turbines in tandem. Rotor blades 41 are provided in six stages in a substantially symmetrical manner. In addition, stator blades 42 are provided in correspondence with the rotor blades. A final-stage rotor blade has a length of 46 inches. Ti-base alloy or high-strength 12% Cr steel as in the Example 2 is used for the final-stage rotor blade. Forged super-clean steel having a fully tempered bainite structure is used for a rotor shaft 44 as in the Example 2. 12% Cr steel containing 0.1% Mo was used for any of rotor blades other than the final-stage rotor blade and for the stator blades. 0.25% C cast steel having the above-described composition was used for inner and outer casings. In the Example 3, a distance between the centers of bearings 43 is 8 m, and a rotor shaft has a diameter of about 800 mm at a position corresponding to a stator blade section, and has the same diameter at a rotor-blade implant section in each stage. The distance between the bearing centers is ten times as large as the diameter of the rotor shaft corresponding to the stator blade section.

In the Example 3, the 46-inch blade was formed using martensite steel containing C of 0.23%, Si of 0.06%, Mn of 0.15%, Cr of 11.4%, Ni of 2.65%, Mo of 3.10%, V of 0.25%, Nb of 0.11% and N of 0.06% by weight, and was quenched and tempered. The martensite steel had a tensile strength of 145 kg/mm² and a V-notch impact value of 6.2 kg-m/cm². As an erosion shield 54 for preventing erosion due to water drops in steam, a Stellite (trademark) plate including a Co-base alloy containing C of 1.0%, Cr of 28.0%, and W of 4.0% by weight was bonded to the blade by electron beam welding. In the Example 3, a continuous cover 57 was formed by machining after integral forging of all components. The continuous cover 57 may be mechanically formed in one unit.

The rotor shaft has rotor-blade implant sections, and not only the fork type but also the inverted Christmas tree type may be used for a dovetail in the final stage.

In the low pressure turbine, the axial width of the rotor-blade implant root gradually increases in four levels with advance toward a downstream side from a first stage corresponding to the smallest width, where widths are the same between second and third stages and between fourth and fifth stages, and the width in the final stage is 6.2 to 7.0 times as large as the width in the first stage. The width in the second or third stage is 1.15 to 1.40 times as large as the width in the first stage, the width in the fourth or fifth stage is 2.2 to 2.6 times as large as the width in the second or third stage, and the width in the final stage is 2.8 to 3.2 times as large as the width in the fourth or fifth stage. The width of the root is indicated by a point connecting an extension of a fan and a diameter line of the rotor shaft.

The length of the blade section of the rotor blade in the Example 3 increases in each stage from 4" in the first stage to 46" in the final stage being the eighth stage. The length of the blade section in each stage gradually increases within a range of 1.2 to 1.9 as a ratio of a length in a certain stage to a length in an adjacent upstream stage.

The rotor-blade implanting root has a large diameter compared with a portion corresponding to the stator blade and has a fan shape, and has a width that increases with an increase in length of the blade section of the rotor blade. A ratio of such a width to the length of the blade section of the rotor blade is 0.30 to 1.5 from the first stage to the last stage before the final stage, which gradually decreases at every stage in that range. The ratio gradually decreases at a rate within a range of 0.15 to 0.40 with every advance in stages. The ratio is 0.50 to 0.65 in the final stage.

The average diameter of the rotor blade in the final stage in the Example 3 is 2590 mm for a 43"-blade with 3000 rpm, 2160 mm for a 36"-blade with 3600 rpm, 2665 mm for a 46"-blade with 3000 rpm, and 2220 mm for a 38"-blade with 3600 rpm.

The generation plant in the Example 3 is mainly configured of a boiler, high and intermediate pressure turbines, a low pressure turbine, a condenser, a condensate pump, a low-pressure feed water heater system, a deaerator, a boost pump, a feed water pump, and a high-pressure feed water heater system. Specifically, superheated and superhigh-pressure steam generated in the boiler enters the high-pressure side turbine to generate power, and is then reheated in the boiler and enters the intermediate-pressure side turbine to generate power. The exhaust steam from the high and intermediate pressure turbines enters the low pressure turbine to generate power, and is then condensed by the condenser. The condensate is fed to the low-pressure feed water heater system and the deaerator by the condensate pump. The feedwater deaerated by the deaerator is fed to the high-pressure feed water heater system by the boost pump and the feed water pump and is heated therein, and is then returned to the boiler.

The feedwater becomes high temperature and pressure steam through an economizer, an evaporator, and a superheater in the boiler. In addition, boiler combustion gas heating the steam exits the economizer, and then enters an air heater to heat air. The feed water pump is driven by a feed-water-pump drive turbine activated by bleed steam from the intermediate pressure turbine.

In the high temperature and pressure steam turbine plant configured in this way, the temperature of the feedwater exiting the high-pressure feed water heater system is extremely higher than temperature of feedwater in a typical thermal power plant; hence, the temperature of the combustion gas exiting the economizer in the boiler is necessarily extremely high compared with that in a typical boiler. Thus, the gas temperature is prevented from lowering through heat recovery from the boiler exhaust gas.

A 1000 MW class large-scale generation plant may also have a configuration similar to that in the Example 3, the 1000 MW class large-scale generation plant having a steam inlet temperature of the high and intermediate pressure turbines of 610°C or more, a steam inlet temperature of the low pressure turbine of about 400°C, and a steam outlet temperature of the low pressure turbine of about 60°C. In the case of the steam temperature of 593°C or 630°C, the materials and the structure in the Example 3 can also be used without any modification.

^ The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. A turbine blade comprising:
a turbine blade substrate (63) including an iron-base alloy;
an erosion shield plate (61) including a Co-base alloy; and
a shim (62) including a Ni-Fe alloy,
wherein the erosion shield plate (61) is fixed to a leading edge of the turbine blade substrate (63) with the shim (62) therebetween by an electron beam welding.

2. The turbine blade according to claim 1,
wherein the erosion shield plate (61) is fixed by a single-pass electron beam welding.

3. The turbine blade according to claim 1,
wherein thicknesses (103) of a weld zone of the turbine blade substrate (63) and the erosion shield plate (61) at a section perpendicular to a radial direction of the turbine blade substrate are larger than a thickness (102) of a main body of the turbine blade substrate (63) at the section, and the thickness of the shim (62) is equal to the thicknesses (103) of the weld zone.

4. The turbine blade according to claim 1,
wherein a groove is shaped such that width of the shim (62) is wider on an electron-beam injection side in fixing of the erosion shield plate (61) by the electron beam welding.

5. The turbine blade according to claim 1,
wherein the shim (62) is formed of a Ni-Fe alloy containing Ni of 70% or more.

6. A low-pressure turbine rotor comprising the turbine blade according to claim 1.

7. A low-pressure steam turbine comprising the low-pressure turbine rotor according to claim 6.

8. A steam turbine generation plant comprising the low-pressure steam turbine according to claim 7.

9. A turbine blade comprising:
a turbine blade substrate (63) including an iron-base alloy;
an erosion shield plate (61) including a Co-base alloy; and
a shim (62) including a Ni-Fe alloy,
wherein the erosion shield plate (62) is fixed to a leading edge of the turbine blade substrate (63) with the shim (62) disposed therebetween, and
wherein thicknesses (103) of a weld zone of the turbine blade substrate (63), the erosion shield plate (61) and the shim (62) at a section perpendicular to a radial direction of the turbine blade substrate (63) are larger than a thickness of a main body of the turbine blade substrate (63) at the section, and the thickness of the shim (62) is equal to the thicknesses (103) of the weld zone.
